# EUROPEAN PATENT APPLICATION

(11) **EP 0 880 929 A2**
(43) Date of publication of application: **02.12.1998**
(21) Application number: 98401257.5
(22) Date of filing: 27.05.1998
(51) Int. Cl.: A47J 41/02

(54) **Insulating double-layered container**

(30) Priority: 29.05.1997 JP 140553/97; 29.05.1997 JP 140554/97; 29.05.1997 JP 140556/97; 27.06.1997 JP 5569/97 U
(71) Applicant: Nippon Sanso Corporation, Tokyo 105-0003 (JP)
(72) Inventor: Komiya, Yasuhiko, c/o Nippon Sanso Corporation, Tokyo 105-0003 (JP); Kuwana, Takeshi, c/o Nippon Sanso Corporation, Tokyo 105-0003 (JP); Yamada, Masashi, c/o Nippon Sanso Corporation, Tokyo 105-0003 (JP); Matsuda, Kunio, c/o Nippon Sanso Corporation, Tokyo 105-0003 (JP); Shigeta, Kenji, c/o Nippon Sanso Corporation, Tokyo 105-0003 (JP); Yamada, Norio, c/o Nippon Sanso Corporation, Tokyo 105-0003 (JP)
(74) Representative: Picard, Jean-Claude Georges

(57) **Abstract**

An insulating double-layered container comprising an insulating layer between the inner and the outer containers wherein an antibacterial layer is formed on at least one of said inner container and said outer container is capable of maintaining the container in good sanitary conditions without the bacterial growth even if they are attached to the surface of the inner container.

## Description

### Field of the invention

The present invention relates to antibacterial insulating double-layered containers and to production methods therefor.

This application is based on patent applications No.Hei 9-140553, No.Hei 9-140554, and No.Hei 9-140556 and utility model application No.Hei 9-5569, which were filed in Japan, and the content of which is incorporated herein by reference.

### Background Art

Conventionally, portable thermos bottles for keeping beverages, etc., have structures formed by an outer container and an inner container made of stainless steel, creating an insulating vacuum layer therebetween, while the inner container and the outer container are sealed at their mouth portions with a removable stopper attached thereto. Such thermos bottles are stored after the inner surface of the containers are washed with water, etc., then air-dried.

However, even if the containers are air-dried, in some cases, they are not completely dried because their openings are rather small. Thus, if the inner layer of the containers are kept partially dried i.e., are still somewhat wet, they might be contaminated by bacterial growth. This is especially true for insulating vacuum double-layered containers with excellent insulating performances such as thermos bottles even if they are force-dried by dish dryers, etc., as the thermal conductivities are rather low.

As for the vacuum-insulating materials, austenitic Stainless steel that are highly corrosion resistant such as SUS304 etc., are widely used. The austenitic stainless steel will be subjected to work hardening when strong plastic-deforming force was applied, causing work-induced martensitic transformations. Therefore, it becomes possible to increase the strength of material in this specific characteristic. However, the following inconveniences may be found due to martensitic transformations.

First, even if the strength of the material will be increased by work hardening, the corrosion resistance will be reduced due to martensitic transformation and increased residual stress.

Then, in some cases, stress corrosion cracking may be found at the site especially where the strong plastic strain was applied when the inner and the outer layers were formed.

In order to avoid the problems above, the following method is often used without an excessive plastic deformation: rolling the body to form the tube and welding, then, forming the bottom part separately, and finally bonding the two parts together into an integral body.

Therefore, not only that it will be necessary to introduce a welding process, but also there will be another problem at the site of welding: over-saturated carbon atoms will be deposited at the grain boundary of the carbonated Cr, resulting in intergranular corrosion caused by reduced corrosion resistance due to the reduced Cr content in the vicinity of the grain boundary.

For stainless steels with work-induced martensitic transformations, there are methods to remove work-hardening deformation that are carried out with annealing treatment over 870°C, forming carbonated Cr or brittle layers into solid solution, obtaining standard mechanical characters and anticorrosion properties as austenitic stainless steel.

However, the annealing process occasionally caused buckling, and deformation, etc., due to the reduced strength of the material.

In the case in which an inner casing is arranged in an outer casing so as to maintain a space therebetween in which the space is charged with an air, sealed at the opening to form an integrated body, it will be necessary to form a vacuum insulating layer by means of a beating-evacuation process in order to form a vacuum insulating layer. However, it is likely to cause intergranular corrosion if the process is carried out in a temperature range of 600-800°C in which formation of a grain boundary deposit within carbonated Cr in austenite is likely.

Thus, it will be necessary to carry out the process above the temperature range. However, the process can cause degraded material hardness.

In short, in the process of manufacturing vacuum double-layered containers, if the thermal treatment, an essential process for evacuation, is carried out at a high temperature, resulting in a reduction of strength, it will be necessary to increase the thickness of the inner and the outer containers, which will not allow reduction of the weight of the material.

Moreover, even if the evacuating thermal treatment is carried out at the lower temperature, it still creates other problems such as cracking and reduced corrosion resistance.

In addition, as an anti-radiant measure, in the case in which the radiation blocking material such as metal plating is applied at least in the main body of the outer surface of the inner container, especially at the site of strain caused by the strong plastic deformation resulting in an insufficiently-radiating metal plate where the thickness and the glossiness are uneven.

In general, these vacuum insulating containers are formed by forming the inner and the outer containers by austenitic stainless steel, joining the inner and the outer containers at the respective edges of their mouth parts to yield an integrated double-walled container with a space therebetween, and evacuating the space to form an insulating layer. However, the evacuating process is generally carried out in a temperature range of 400 to 1,200°C.

On the other hand, it is known to add copper in an austenitic stainless steel as a means of providing an antibacterial property into the austenitic stainless steel. This method utilizes the antibacterial action of the Cu ions together with the anticorrosion property of stainless steel itself, and is desirable for cooking, food, beverages, storing, and medical applications.

However, if the insulating double-layered vacuum container is formed by the above-mentioned process with stainless steel containing Cu, it will cause Cu to diffuse into the interior of the material during the above-mentioned thermal evacuating process, being solidified, forming Cu-deficient layers with the lower Cu content due to surface deterioration of the inner and the outer containers, creating a problem in that the antibacterial effect from the Cu is not sufficiently obtained. Sometimes, the antibacterial properties are decreased by surface deterioration caused by rolling process or drawing process to form the inner and the outer containers. In some cases, the antibacterial action also became less effective or is even diminished when electropolishing was applied to the Cu-containing stainless steel due to the preferential removal of Cu.

In order to recover the antibacterial action of the above-mentioned steel that had become less effective, there is a method in which the Cu-rich surface (outer layer) is exposed by destroying the decomposed surface layer by soaking the steel in acidic solution (Japanese Patent Application. First Publication, Hei 8-229107). This method comprises soaking the Cu-containing stainless steel in the acidic solution, preferably at a pH of 2.5 or less, containing non-oxidizing or reducing acid such as sulfuric acid, fluorine nitrate, oxalic acid, etc., in order to maintain the Cu concentration of the surface layer of 0.10 atomic % or more.

However, as for the vacuum double-layered container with Cu-containing stainless steel, there was a problem in that the recovery of the decreased antibacterial strength was not sufficient, regardless of this treatment. It is assumed, as mentioned above, that the surface-decomposed layer (Cu-deficient layer) formed during the above-mentioned heat evacuating process are not sufficiently destroyed by the above-mentioned recovery treatment alone.

### Summary of the Invention

A first object of the present invention is to provide insulating double-layered containers such as thermos bottles that are capable of maintaining the container in good sanitary conditions without the bacterial growth even if they are attached to the inner surface of the inner container.

A second object of the present invention is to provide metallic double-layered vacuum insulating containers that are very strong and highly corrosion resistant without the annealing process.

A third object of the present invention is to provide the metallic double-layered vacuum containers comprising stainless steel, etc., uniformly plated and with the superior radiation-preventing effects.

A fourth object of the present invention is to provide the metallic double-layered vacuum containers comprising the Cu-containing stainless steel and the production process thereof, securely maintaining their antibacterial properties.

In order to accomplish the first object, the present invention is characterized by the antibacterial layer built in at least in either the aforementioned inner or the outer container.

The first aspect accomplishes the first object of the present invention by comprising metallic material containing antibacterial material in either of the above-mentioned inner or the outer container wherein the metallic insulating double-layered containers are equipped with heat insulating layer therebetween the metallic inner and the outer containers.

The second aspect accomplishes the first object of the present invention by providing an insulating double-layered container characterized by the antibacterial layer provided in the inner surface of the above-mentioned container, comprising synthetic resin material including antibacterial material.

The third aspect accomplishes the second object of the present invention by providing an insulating double-layered container comprising austenitic stainless steel with 1-1.5% Cu content wherein at least either the inner or the outer container of the above-mentioned container is provided with the metallic inner and the outer container.

According to this structure, the inner or the outer containers is formed of austenitic stainless steel containing Cu. Therefore, it is possible to form the inner and the outer containers with highly anticorrosive performance as they are made of the above-mentioned material to suppress cracking and corrosion induced by the martensitic transformations even if it is applied with the strong plastic deformation. Thus, it becomes possible to eliminate the annealing process, and to set a low temperature to carry out the evacuating process, providing the high-quality insulating metallic double-layered vacuum containers.

Furthermore, with this structure, having sufficient strength, it is possible to reduce the thickness of the inner and the outer containers, and thus to reduce the weight of the entire container.

In addition, as it becomes possible to apply strong plastic-deformation forces, deep-set containers can be formed only with deep-drawing process which was conventionally essential for the main and the basal part of the container to be formed separately, then join them by means of welding, reducing the number of manufacturing steps, thus eliminating the formation of the welding part with inferior anti-corrosion properties.

Moreover, as the annealing process can be eliminated, it is possible to carry out the evacuating process at a lower temperature, thus reducing the labor and the production cost.

The fourth aspect accomplishes the third object of the present invention by providing an insulating double-layered container equipped with the metallic inner and outer containers creating a sealed space between the inner and outer containers as the vacuum insulating layer, comprising at least either of the above-mentioned inner and the outer containers comprising the austenitic stainless steel with Cu content of 1.5-5%, and the galvanized layer formed on the Cu-containing surface of at least one insulating side of the above-mentioned inner and the outer containers.

According to this structure, the inner and/or the outer container, having been formed with the Cu-containing stainless steel, with its high electric conductivity, uniformly plating the containers to form a thin film and thus reducing the production cost. In addition, as the forming deformation caused by fabrication is reduced, it is possible to form metal plating with an even thickness or glossiness, thus creating the metal plating with superior radiation-preventing effects; therefore the container becomes an insulating double-layered container with superior insulating performance.

The fifth aspect accomplishes the fourth object of the present invention by providing an insulating double-layered container, equipped with metallic inner and the outer containers, creating a sealed space between the inner and the outer containers as the vacuum insulating layer, comprising at least either of the above-mentioned containers with stainless steel containing 1.5-5 % copper and at the same time at least one of the Cu-containing surface of the inner surface of the inner container or the outer surface of the outer container is treated with abrasives.

Moreover, the manufacturing method of the insulating double-layered container of the present invention is characterized by the following: at least one of the inner or the outer containers comprises stainless steel containing 1.5-5% copper, forming an integral body in which an inner container is arranged in an outer container so as to maintain a space therebetween, creating the insulating layer by evacuating the above-mentioned space, followed by polishing the surface of at least one of the copper-containing face of the inner surface of the inner container or the outer surface of the outer container.

According to this structure, it is possible to obtain a metallic vacuum insulating double-layered container with superior antibacterial properties, by a simple and inexpensive method, wherein the copper-deficient layer formed on the surface during the production process of the double-layered vacuum container comprising copper-containing stainless steel is mechanically removed with the abrasives. In addition, as the surface area becomes larger after polishing, expanding the contact area for Cu and bacteria in order to fully exhibit the antibacterial property of Cu.

In particular, with the blast polishing method, it will be possible to polish into the detailed figures without leaving the abrasives on the surface even if the surface figure of the inner container is complex.

Moreover, by soaking the container in the acidic solution after it is polished with abrasives, the antibacterial properties may be further improved.

In addition, as it becomes possible to remove an oxidized product deposited on the surface layer of the Cu-containing stainless steel upon thermal evacuation processing by means of polishing the surface with abrasives, the finished product has improved anticorrosion properties.

### BRIEF EXPLANATION OF THE DRAWINGS

Fig. 1 is a cross-section showing an example of the first aspect of the present invention.

Fig. 2 is a cross-section showing an example of the second aspect of the present invention.

Fig. 3 is a partial cross-section showing an example of the third aspect of the metallic vacuum double-layered container.

Fig. 4 is a partial cross-section showing an example of the fourth aspect of the metallic vacuum double-layered container.

Fig. 5 is a schematic drawing showing an example of blast polishing used in the production method of the metallic vacuum double-layered containers.

### DETAILED EXPLANATION OF THE EMBODIMENTS

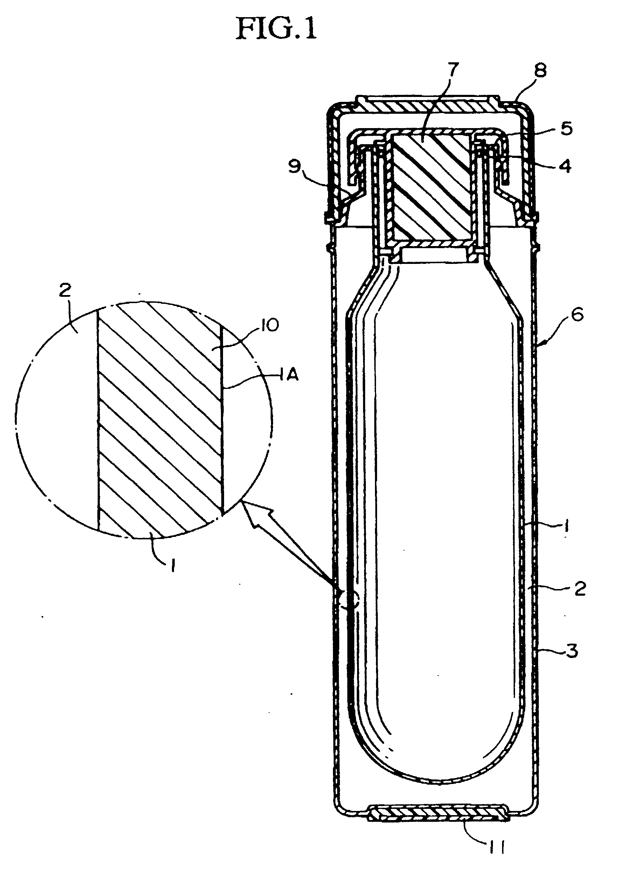

An example of the first embodiment of the present invention will be explained below with reference to Fig. 1. This insulating container has a structure formed by an outer container 3 (with a bottom part) and an inner container 1 (also with a bottom part), creating an insulating vacuum space 2 therebetween, while the inner container and the outer container are joined at their mouth portions, forming an insulating vacuum double-layered container 6 ; the mouth portion 4 of the short tubular inner container 1 and the mouth portion 5 of the outer container are joined; the stopper 7 is placed at the above-mentioned mouth portion 4 in a removable manner; and the tumbler-shaped cap 8 outside of the stopper 7 is placed at the shoulder portion 9 of the outer layer 3 in a removable manner.

The above-mentioned container 1 is constructed by: a thin metallic plate made of stainless steel with 3-4% Cu content by weight as an antibacterial material, for example, austenitic stainless steel, trade name NSSX M7, manufactured by Nisshin Seiko K.K., forming an antibacterial layer 10 as a part of the antibacterial agent when contained therein when the steel is exposed at the surface 1A.

The outer layer 3 comprises a thin stainless plate, such as austenitic stainless steel SUS304. The mouth portions 4 and 5 are bonded by means of welding, etc. In addition, a vacuum exhaust hole is formed at the center of the bottom portion of the outer layer 3 (not shown), and a sealing material such as brazing material is placed at the vacuum exhaust hole (not shown), setting the double-layered container with the respective mouth portions 4 and 5, connected in the vacuum furnace, evacuating at approximately 500°C, while evacuating the space between the inner container 1 and the outer container 3, forming the above-mentioned insulating double-layered vacuum container 6 by means of melting the sealing material. Furthermore, 11 is a synthetic resin material for the bottom portion of the outer container 3.

Therefore, if the container needs to be stored after it is filled with beverages, etc., first, remove the cap 8 and the stopper 7, then wash the inside of the inner container 1 with water, finally the double-layered container 6 should be air-dried or force-dried by means of a dish dryer. On this occasion, the inner surface 1A is not easily dried because the mouth portion 4 is smaller in diameter than the other portions of the inner container 1. If the container is stored leaving the inner surface 1 wet as it is, bacteria will possibly attach to the surface and proliferate. However, with the antibacterial layer 10 formed in the inner surface 1A, it is less likely that bacteria will proliferate, as the bacterial growth is suppressed by the above-mentioned antibacterial action, even if the inner surface 1A is wet when it is stored.

As mentioned above, with the first aspect of the present invention, the insulating vacuum layer 2 formed between the inner container 1 and the outer container 3, having formed the antibacterial layer 10 at least on the inner surface of the above-mentioned container 1, will eliminate the possible bacterial contamination of the inner surface 1A, thus, constantly maintaining sanitary conditions.

In addition, as an example shown in Fig. 1, the insulating vacuum layer 2 is created between the stainless steel inner container 1 and the outer container 3, comprising the above-mentioned inner container 1 with stainless steel containing the antibacterial material, forming the antibacterial layer 10 at least on the inner surface of the inner container 1, thus eliminating the possibilities of bacterial attachment and proliferation on the inner surface 1A, maintaining the sanitary conditions of the inner surface 1A at all times. Moreover, it will be possible to provide the antibacterial layer 10 on the inner surface 1A only by press working, etc., of the stainless plate by forming the inner container 1 itself with the stainless steel containing antibacterial material.

In addition, as with an example shown in Fig. 1, the above-mentioned mouth portion 4, having been formed smaller in diameter than the other portion of the inner container 1, it is more likely for bacteria to adhere to the inner surface 1A of the inner container and proliferate therein when the gas permeation into the internal part of the inner container 1 drops.

However, by arranging the antibacterial layer 10 on the inner surface 1A as above, it becomes possible even for the insulating double-layered container 6 with relatively small mouth portion 4, to maintain sanitary conditions of the internal part.

Furthermore, as an example shown in Fig. 1, it can provide an even more improved sanitary condition for the insulating double-layered container 6, without corrosion, by forming the inner container 1 and the outer container 3 of stainless steel.

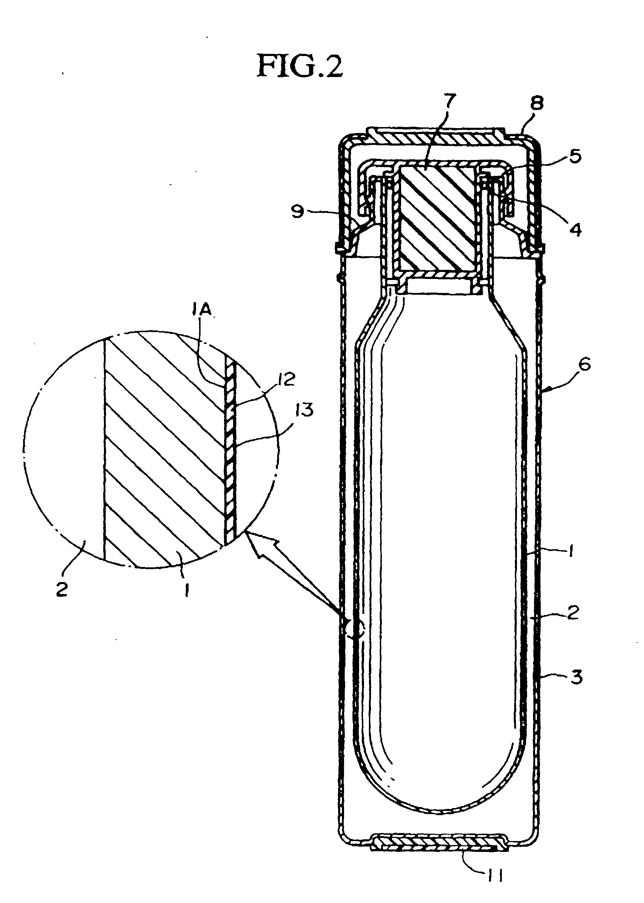

Fig. 2 shows an example of the second aspect of the present invention.

Detailed explanation will be omitted by placing the same marks for the identical parts of the example for the above-mentioned first aspect of the present invention. The insulating double-layered vacuum container 6 is constructed by: forming the inner container 1 and the outer container 3 which is larger than the inner container, are put together leaving an insulating vacuum layer 2 therebetween, and the inner and the outer containers are then joined at the respective edges of their mouth portions 4 and 5 to give a double-layered container.

The above-mentioned inner container 1 and the outer container 3 comprises the stainless sheet metal, such as austenitic stainless steel SUS304; then the antibacterial layer 13 comprising synthetic resin material containing antibacterial material 12 is arranged on the internal surface 1A of the inner container 1. The above-mentioned antibacterial material 12 may contain copper, silver, or zinc, etc., where the antibacterial material 12 is contained in the synthetic resin such as fluoroplastics, silicone resin, urethane resin, acrylic resin, etc., arranging the above-mentioned antibacterial layer 13 by coating the internal surface 1A.

The antibacterial layer 13 containing the above-mentioned antibacterial material 12 is coated on the inner surface 1A after forming the vacuun insulating layer 2, which is formed by joining the mouth portions 4, 5 as described above, placing the container in the vacuum furnace, evacuating from the evacuation hole, and melting the sealing material.

Instead of the vacuum evacuation through the above-mentioned vacuum hole, providing a tip tube at the center of the bottom of the outer container 3 (not shown), evacuating the space between the inner container 1 and the outer container 3 by thermal evacuation carried out at about 400°C to form vacuum insulating layer 2, closing a tip tube by vacuum-sealing under pressure, and arranging an antibacterial material 13 thereafter may be performed.

Therefore, in order to store the container after being used, the double-layered container 6 will be air-dried or force-dried by means of a dish dryer after the internal part of the inner container 1 is washed with water.

If the inner surface 1A is stored being wet thereafter, it is likely that bacteria will attach to the surface and proliferate; however, with the antibacterial layer 13 arranged on the inner surface 1A, bacterial growth will be suppressed by the antibacterial action of the antibacterial layer 13, eliminating possible bacterial growth even if the inner surface 1A is wet.

As described above, in the example shown in Fig. 2, as the example shown in Fig. 1, the presence of the antibacterial layer 13 at least on the inner surface 1A of the inner container 1 will eliminate the possible bacterial contamination of the inner surface 1A, thus, constantly maintaining sanitary conditions.

In addition, even when the gas permeation into the internal part of the inner container 1 is decreased by forming the mouth portion 4 so as to be smaller in diameter than the other portion of the container 1, the inner surface of the inner container can be maintained in good sanitary conditions. Furthermore, the corrosion can be avoided by forming the inner container 1 and the outer container 3 with stainless steel.

In addition, as shown in Fig. 2, the vacuum insulating layer 2 is arranged between the inner container 1 and the outer container 3 which are made of stainless steel, providing the antibacterial layer 13 by means of coating the inner surface of the above-mentioned container 1 with synthetic resins containing the antibacterial Material 12. With this, it becomes possible to provide the antibacterial layer 13 relatively easily without adding numerous manufacturing steps, by emerging the above-mentioned antibacterial layer 13, after manufacturing the double-layered container by the conventional method, namely connecting the mouth portions of the inner container 1 and the outer container made of the stainless steel along with providing the vacuum insulating layer between the inner and the outer containers producing a double-layered container.

Furthermore, as for the second aspect, the antibacterial layer 13 may be provided by a method other than the coating method such as fitting the molded product by molding the synthetic resins containing the antibacterial material 12 to the inner container 1, also the antibacterial layer may be provided by means of bonding, etc., the above-mentioned resins fabricated to form a sheet or a film, and the container.

Although Fig. 1 and Fig. 2 show examples of the portable thermos bottles, it is also possible to make variations for applications such as table thermos bottles, double-layered heat-retaining lunch boxes to accommodate food containers to keep rice or soup, etc., insulating cooking utensils to accommodate cooking pans to maintain heat-retaining conditions for cooking, or cups to keep coffee, etc.

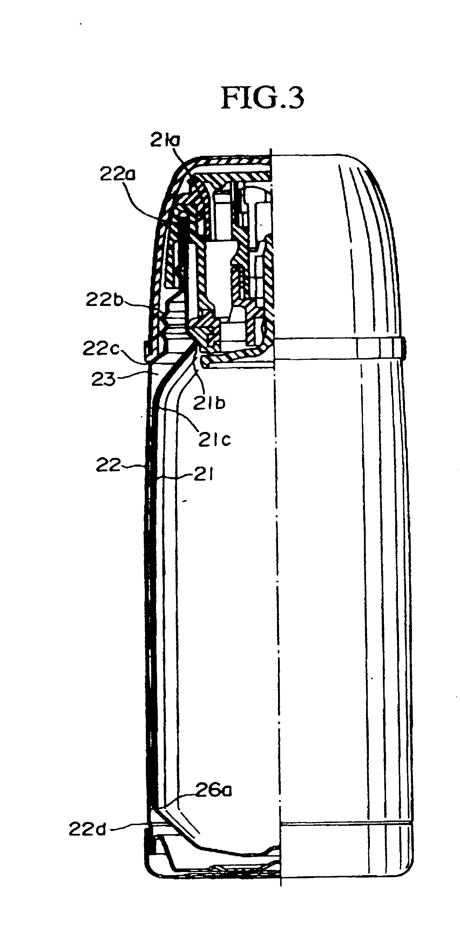

The container in Fig. 3 is an example showing the third aspect of the present invention. This metallic double-layered vacuum container comprises metallic inner container 21 and the outer container 22 separated by the space therebetween, joined to form a double-layered container in an integral body at their mouth portions 21a and 22a, forming the space of the insulating vacuum layer 23.

At least either one, or preferably both of the above-mentioned containers comprises austenitic stainless steel containing 1.5-5 % copper (hereafter called Cu-containing stainless steel) favorably with 1.5-3% Cu-containing stainless steel

If the Cu-content of the stainless steel comprising the inner container 21 and the outer container 22 becomes less than 1.5%, it will not be possible to suppress martensitic transformation and work-hardening resulting therefrom; thus it becomes impossible to exhibit sufficient anticorrosion properties. Because of this, it will make processing such as deep drawing difficult.

In contrast, if the Cu-content of the stainless steel exceeds 5%, it will promote brittleness of the grain boundary at a high temperature, inhibit hot working property, and be inclined to be sensitive to high-temperature cracking. Moreover, with a high homogeneity of the copper for melting and solidifying against stainless steel as a base metal, the stainless steel with 3% Cu-content or less is used favorably.

The inner container 21 or the outer container 22 formed with Cu-containing stainless steel, having been able to suppress martensitic transformations with highly deformed parts such as the inner projection 21b, bulgy portion 21c, bottom part of the inner container 26a, screw part of the outer container 22b, bulgy portion 22c, bottom part of the outer container 22d, preventing lowering the anticorrosion property, thus eliminating the annealing process to solve the problem of the reduced strength.

Moreover, as it will be mentioned later, the inner container 1 and the outer container 2 as shown in Fig. 3, are formed by the deep-drawing process using a single Cu containing stainless steel plate, thus eliminating the welding process that was necessary in the conventional process and avoiding the corrosion of the welded parts.

The metallic double-layered vacuum container with above-mentioned structure comprises at least one of the inner container 21 or the outer container 22 formed with copper-containing stainless steel, separated by the space therebetween, joined to form a double-layered container in an integral body at their mouth portions 21a and 22a, the space of the insulating vacuum layer 23.

As there is no restriction applied to the method of formation of the inner container 21 and the outer container 22 in the present invention, it is possible to employ processing methods such as rolling, drawing, overhanging, welding, etc. In the case in which the copper-containing stainless steel is used, it is possible to form the container out of a single steel plate by means of deep-drawing process, thus eliminating the welding process that was necessary when the body portion and the bottom portion were formed separately. In addition, forming strain of the surface or cracking can be prevented by restraining the martensitic transformations, and as a result an annealing process can be eliminated.

Subsequently, the evacuation is carried out after joining the mouth portions of the inner container 21 and the outer container 22 to form an integrated body, by placing in a vacuum heating furnace at a temperature range of 400-1200°C, preferably at a range of 400-600°C. As for the metallic insulating double-layered vacuum container, with the highly anticorrosive nature as indicated above, it is possible to curry out thermal-evacuation processing below the annealing temperature (870°C). With the present invention, therefore, it will be possible to save electricity and simplify the equipment as compared with the conventional method of forming metallic insulating double-layered vacuum containers.

As a means of sealing the insulating layer after the thermal evacuation, an ordinary method may be used such as sealing by means of closing the tip tube with pressure after evacuating the container through the tip tube furnished at the center of the bottom portion of the outer container into the designated degree of evacuation, or melting and solidifying of the blazing material.

In the third aspect of the present invention, the metallic insulating double-layered vacuum container, as the metallic layer is coated on the container formed by the copper-containing stainless steel, improving the electric conductivity due to copper contained, and restraining the martensitic transformations or forming strain at a place with the strong plastic deformation, resulting in the improvement of the coating performance with a very little unevenness of thickness, or reflectivity, and superior anti-radiation effect.

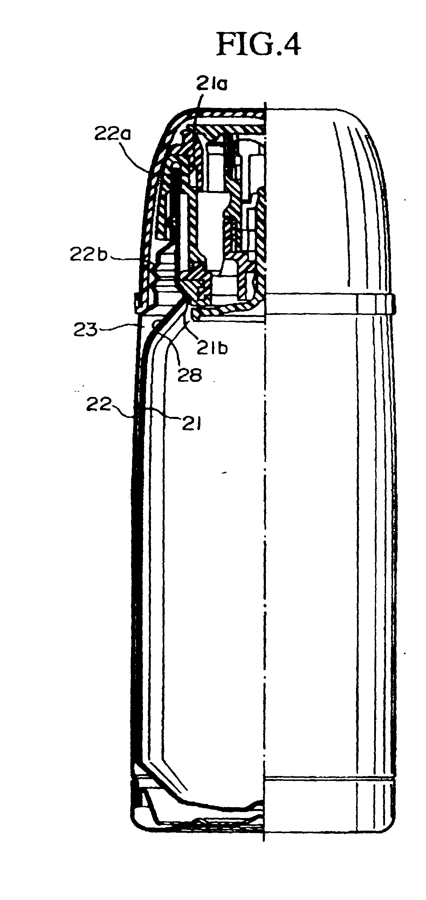

The container shown in Fig. 4 is an example of the fourth aspect of the present invention where the metal-plated layer 28 is formed at least on the outer surface (facing the insulating layer) of the body of the inner container 21, among the containers shown in Fig. 3. The metal-plated layer may be formed on the copper-containing side facing the insulating layer of the outer container 22, or the copper-containing side facing the insulating layer of both the inner and the outer containers. However, as shown in Fig. 4, it is preferable that the metal-plated layer 28 be formed at least on the copper-containing side facing the insulating layer of the inner container.

This metal-plated layer 28 comprises copper, sliver, or gold, etc.

A container using copper-containing stainless steel has a superior insulating performance as it is able to restrain the martensitic transformation; thus, there is no forming strain on the surface, and with the high electric conductivity due to the copper-containing stainless steel which has an excellent electroplating performance without unevenness in thickness or glossiness thus becoming the metal-plated layer 28 with superior anti-radiation effect.

The container in the fourth aspect of the present invention is formed using copper-containing stainless steel on at least one of the inner container 21 or the outer container 22, galvanizing at least one of the copper-containing side in the outer surface of the inner container 21 and the inner surface of the outer container 22, the inner container 21 and the outer container 22 separated by the space therebetween, joined to form an integrated body to form a double-layered container at their mouth portions 21a, and 22a, evacuating the space, thus creating the insulating vacuum layer 23.

The fifth aspect of the present invention is the double-layered vacuum container characterized by the following: at least one of the inner or the outer container comprises austenitic stainless steel containing 1.5-5% copper, at the same time, at least either one of the copper-containing sides of the inner surface of the inner container (the side facing the content) or the outer surface of the outer container (the side facing outside) is polished by abrasives, exposing the copper-containing stainless layer by means of mechanically removing the copper-deficient layer formed on the surface during the production process of the double-layered vacuum container comprising copper-containing stainless steel, with the abrasives.

Abrasives in the present invention can be commonly used to polish stainless steel such as corundum, silicon carbide, alumina, zirconia-alumina, or glass beads, etc. Grain diameters of 50-200 micrometers are preferably used.

As for the polishing method using abrasives, there are blast-polishing, buff-polishing, or scotch-polishing, etc., among which the blast-polishing method is favorably used as it can recover easily without leaving the abrasives attached on surface; it is possible to polish the container securely oven with minute unevenness inside the container.

The following is an application method of blast polishing on a metallic double-layered vacuum container as an exemple of the construction shown in Fig. 3 and Fig. 4.

First, the inner container 21 and the outer container 22 are formed, wherein at least one, or preferably both are made of stainless steel with 1.5-5% copper content, preferably with 1.5-3% copper content.

The above-mentioned method may be used to form the containers without any particular restrictions. However, if the copper content of the stainless steel comprising the inner container 21 and/or the outer container 22 becomes less than 1.5%, it will not only show insufficient antibacterial property, but will also be unable to carry out processing such as deep-drawing due to reduced processing property (insufficient workability). In contrast, if the copper content of such a container exceeds 5%, it will promote brittleness in the grain boundary at a high temperature, thus inhibiting hot-working property, increasing the likelihood to high-temperature cracking. Furthermore, the stainless steel with copper content below 3% is used favorably, as copper has a high uniformity for melting and solidifying against stainless steel as a base metal.

As shown in Fig. 4, galvanized layer 28 may be formed using copper, silver, or gold, etc., at least on either side facing the insulating layer of the above-mentioned inner container 21 or the outer container, preferably at least on the body of the outer surface of the inner container 21 (the side facing the insulating layer).

Secondly, evacuation is carried out by setting the container into the vacuum heating furnace after joining the mouth portions 21a of the inner container and 22a of the outer container to form an integral body.

Then, at least one face of the inner surface of the inner container or the outer surface of the outer container of the double-layered container as obtained above is treated with blast-polishing.

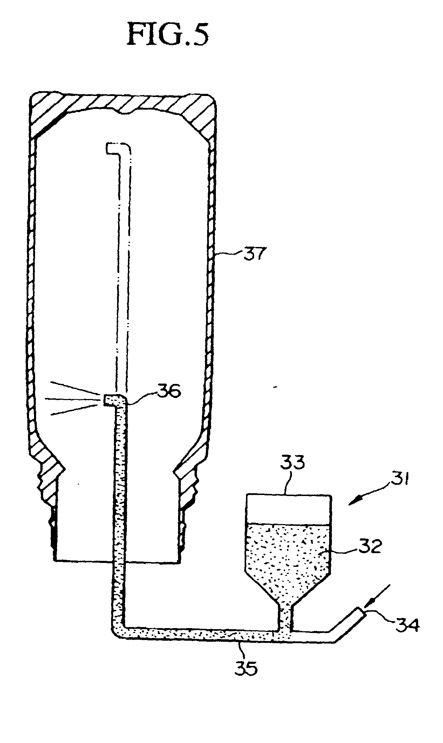

Fig. 5 is an example showing a blast-polishing method used for the production of metallic double-layered vacuum container in the present invention whioh is a schematic drawing indicating an appearance of polishing the inner surface of the inner container.

The blast polisher 31 is roughly constructed by: the tank to store abrasives 32, air-blowing opening 34 connected with the compressor (not shown) to blow the compressed air, the outgoing tube 35 to accompany with a high-speed air-current, and the nozzle 36 to blow out the abrasives with high-speed air-current, and the revolving stand (not shown) to revolve the container 37.

The nozzle 36 can go up and down, wherein the tip (not shown) with numerous nozzles (holes) is installed at the tip of the nozzle 36. As for the tip, it may have a variation of injection degree for abrasives by preparing several tips with different degree of formation of the nozzle in respect to the central axis of the nozzle, by exchanging tips as necessary.

As for abrasives 32, corundum, silicon carbide, alumina, zirconia-alumina, or glass beads, etc., can be used.

To polish the inner surface of the inner container with the polisher 31, fix the container 37 up side down on the rotating stand, then insert the nozzle 36 into the inner part of the container 37 from underneath.

Then, operating the rotating stand while rotating the container 37 being kept up-side-down, running the compressor to send in compressed air from the air-blowing opening 34. The compressed air, becoming a high-speed air-current, blows out from the tip of the nozzle 36, going through the outgoing tube 35, accompanied with the abrasive material 32 falling from the tank 33. It is preferable to set up the blow-off pressure approximately 2 to 5kg/cm²G. The entire inner-surface of the inner container is polished, keeping the condition as it is, moving the nozzle 36 up and down.

Then, the container is polished with abrasives blown in a different injection degree by exchanging the tip at the top of the nozzle, as required.

Meanwhile the abrasive material 32 blown out with high-speed air-current is collected by means of the recovery step (not shown) underneath the container and sent back to the tank 33 for recycling.

Moreover, as for the present invention, it is preferable to soak the container in an acidic solution, to be safe, after surface-polishing with the abrasive material, as this will further improve the antibacterial property.

It is possible to apply the method shown in the Japanese Patent Application, First Publication, Hei 8-229107 for the recovery treatment. The objective surface is preferably soaked in an acidic solution containing non-oxidizing or reducing acid, preferably below pH2.5, in aquenous solutions of dilute sulfuric acid, fluorine nitrate, or oxalic acid, at a temperature range of 50-80°C.

So far, the present invention has been explained based on an example of the metallic double-layered vacuum container comprising the inner container and the outer container joined at their mouth portions to form a double-layered container in an integral unit with a space therebetween, wherein the above-mentioned space is evacuated to create an insulating vacuum layer. However, the present invention is not limited thereto, as long as it is a double-layered container equipped with an insulating vacuum layer. Especially with the metallic double-layered vacuum container of the present invention, using copper-containing stainless steel with a high workability/formability, it becomes possible to design the shape of forming materials freely, as compared to the case where austenitic stainless steel without copper is used. Therefore, for example, it becomes possible to form the container as one unit, from the inner container to the tube portion of the outer container, by means of deep-drawing or inverted redrawing, starting from a single metal sheet, to form a double-layered container in an integrated body by joining this forming material and the bottom part of the outer container.

Moreover, the present invention is applicable to thermally insulated cooking pans, thermally insulated cups, food containing cans, heat-retaining lunch boxes, in addition to the thermos bottles shown in the above-mentioned figures.

### EMBODIMENTS

The following are detailed explanations of the present invention based on the embodiments.

### First Embodiment

An insulating vacuum thermos bottle was made according to the structure shown in Fig. 3, by means of drawing, wherein both inner and outer containers are made of austenitic stainless steel NSSXM7 with the copper content of 3-4% made by Nisshin Seiko K.K. (electric resistance: 0.8 ohm with 40 mm (length) X 10 mm (width) X 0.2 mm (thickness)).

An evacuating hole was formed at the center of the bottom part of the outer container. Then, the mouth portions of the inner and the outer containers were welded to form a double-layered container in an integral body. The insulating vacuum thermos bottle was formed thereafter, placing brazing material at the evacuation hole, sending into a vacuum heating furnace, evacuating at 500°C while evacuating the space between the inner and the outer containers, then vacuum-sealing the applicable portions by means of melting the sealing material made of brazing material.

This thermos bottle was examined by spraying 5% saline solution by weight at 35°C atmosphere for 72 hours; however, there was no rust found in the container.

### Second Embodiment

After joining the mouth portions of the inner and the outer containers to form a double-layered container in an integral body as in the First embodiment, the second examination was carried out, arranging a tip tube at the center of the bottom part of the outer container, thermally evacuating at 400°C, while evacuating the space between the inner and the outer containers, forming vacuum insulating layer, closing a tip tube by vacuum-sealing under pressure. Except for the above-mentioned part, the insulating vacuum thermos bottle was formed with the same production process as in the First embodiment, and the salt spray corrosion test was carried out thereafter.

### Comparative Example 1

The inner and the outer containers were made with austenitic stainless steel SUS304 without copper (electric resistance : 1 ohm with 40 mm (length)X 10 mm (width)X 0.2 mm (thickness)), then the welding process was carried out. Except for the above-mentioned part, the insulating vacuum thermos bottle was made with the same production process as in the first embodiment, and the salt spray corrosion test was carried out thereafter.

### Comparative Example 2

The insulating vacuum thermos bottle was made with the same production process as in the second embodiment, except that the inner and the outer containers were formed with austenitic stainless steel SUS304 without copper, and the salt spray corrosion test was carried out thereafter.

The Table 1 shows the summary of the results from the above embodiments and comparative examples:

**Table 1**

| | Material | Vacuum-sealing Method with: | Thermal-evacuation Temperature | Corrosion found |
|---|---|---|---|---|
| First Embodiment | NSSXM7 | Brazing material | 500°C | None |
| Second Embodiment | NSSXM7 | Tip tube | 400°C | None |
| Comparative Example 1 | SUS304 | Brazing material | 500°C | Yes |
| Comparative Example 2 | SUS304 | Tip tube | 400°C | Yes |

As for the thermos bottles mentioned in the comparative examples 1 and 2, as shown in the Table 1, there was some corrosion found in the following locations suffered from severe plastic deformation:
- Inner container:: inner projection, bulgy portion, bottom part of the inner container,
- Outer container:: screw part of the outer container, bulgy portion, bottom part of the outer container.

However, no corrosion was found in the thermos bottles of the first and the second embodiments.

### Third Embodiment

An insulating vacuum tbermos bottle was made according to the structure shown in Fig. 4 by means of drawing, wherein both inner and outer containers are made of austenitic stainless steel NSSXM7 with copper content of 3-4% made by Nisshin Seiko K.K. (electric resistance: 0.8 ohm with 40 mm (length) X 10 mm (width) X 0.2 mm (thickness)). An evacuating hole was formed at the center part of the bottom of the outer container.

Then, the outer surface of the inner container was plated with copper, wherein the film thickness at the middle of the body was set up to be 2.0 micrometers; the film thicknesses of the upper- , middle- , and bottom-body parts were measured as follows:
the upper part 3.2 - 2.2 micrometers
the middle part 2.8 - 2.2 micrometers
the bottom part 3.1 micrometers.

The difference in the plate thickness between the thickest and the thinnest parts was 1.0 micrometer, and the glossiness of the plate was satisfactory.

Then, the mouth portions of the inner and the outer containers were welded to form a double-layered container in an integral body. The insulating vacuum thermos bottle was formed thereafter, placing brazing material at the evacuation hole, sending into a vacuum heating furnace, evacuating at 500°C while evacuating the space between the inner and the outer containers, then vacuum-sealing the applicable portions by means of melting the sealing material made of brazing material.

### Comparative Example 3

The inner and the outer containers are formed with austenitic stainless steel SUS304 without copper (electric resistance: 1 ohm with 40 mm (length)X 10 mm (width) X 0.2 mm (thickness)). Then, the outer surface of the inner container was plated with copper, wherein the film thickness at the middle of the body part was to be 2.0 micrometers; film thicknesses of the upper- , middle- , and bottom-body parts were measured as follows:
the upper part 3.5 - 1.8 micrometers
the middle part 3.2 - 1.7 micrometers
the bottom part 3.6 micrometers.

The difference in the plate thickness between the thickest and the thinnest parts was 1.9 micrometers. Moreover, the reduced glossiness of the plate was observed at the part particularly suffering from severe plastic deformation. Furthermore, there was more average-thickness than in the first embodiment. The insulating vaccum thermos bottle was formed as in the Embodiment 3, thereafter.

### Comparative study of the thermal insulating capability

Ten insulating vacuum thermos bottles were prepared, using the inner containers made in Embodiment 3(NSSXM7) and Comparative Example 3, five bottles each. Then they were filled with boiling water at 95°C, and covered. Twenty-four hours later, the temperature of each bottle was measured, and the average was calculated. As a result, the average temperature in Embodiment 3 (NSSXM7) was 54.9°C, and 52.1°C in Comparative Example 3 (SUS304). Therefore, it was confirmed that the heat-retaining properties measured in the embodiments were superior.

### Experimental Example 1

The insulating vacuum thermos bottle was made according to the structure shown in Fig. 4, by means of drawing, wherein both inner and outer containers were made of austenitic stainless steel NSSXM7 with the copper content of 3-4% made by Nisshin Seiko K.K. Then the mouth portions of the inner and the outer containers were welded to form a double-layered container in an integral body, evacuated at 1000°C thereafter.

The inner surface of the inner container and the outer surface of the outer container, in the double-layered container obtained as above, were polished by the following method: blast polish using abrasives (glass beads blown at 5kg/cm²G), scotch polish, electropolish; in addition, a double-layered container without surface-treatment was prepared.

Their antibacterial properties were tested as follows. The results are shown in Table 2.

### Antibacterial property test

Bacteria-containing solution with the number of living bacteria 1.4 X 10⁵/ml was prepared by cultivating *Escherichia coli* in a regular bouillon culture medium, and was treated with a buffer solution of phosphoric acid.

Then, one ml of the above solution was dripped on the following four kinds of surfaces treated with such method; blast polish, scotch polish, electropolish, and without polish. They were kept standing for 24 hours at 25°C and the number of surviving bacteria was checked thereafter.

As a result, as shown in Table 2, a remarkable recovery was seen in antibacterial properties of the above, treated with the blast polish, and scotch polish methods. Therefore, the effect of the present invention was confirmed. On the other hand, it was surmised that the antibacterial property of the above, treated with electropolish, was lost as the copper was dissolved away with electropolish, prior to the other ingredients.

**Table 2**

| Object of Examination | Initial concentration of bacteria-containing solution | Number of colonies found |
|---|---|---|
| Without treatment | 1.4 X 10⁵ | 2.7 X 10⁴ |
| Blast polish | 1.4 X 10⁵ | 10 |
| Scotch polish | 1.4 X 10⁵ | 27 |
| Electropolish | 1.4 X 10⁵ | 4.7 X 10⁵ |

### Experimental Example 2

The thermos bottles treated by the above-mentioned three methods as in the Experimental Example 1 were subject to recovery treatment, wherein the bottles were soaked in an aquenous solution of sulfuric acid at pH 0.2, 70°C for 60 seconds, and washed with purified water to recover the antibacterial property, and their antibacterial properties were tested likewise, thereafter. Moreover, the thermos bottle without surface-polish treatment was also subject to recovery treatment and a test for antibacterial properties for comparison. The results are shown in Table 3.

**Table 3**

| Object of examination | Initial concentration of bacteria-containing Solution | Numbers of colonies found |
|---|---|---|
| Recovery treatment only | 1.4 X 10⁵ | 2.7 X 10³ |
| Blast polish + recovery treatment | 1.4 X 10⁵ | None(not found) |
| Scotch polish + recovery treatment | 1.4 X 10⁵ | 10 |
| Electropolish + Recovery treatment | 1.4 X 10⁵ | 2.0 X 10⁵ |

According to the results from Table 3, it was found that the recovery effect was improved with polishing using abrasives, as compared with the recovery treatment alone. The superior antibacterial property was especially seen in the one with combination of blast polish and recovery treatment.

## Claims

1. An insulating double-layered container comprising an insulating layer between the inner and the outer containers characterized in that an antibacterial layer is formed on at least one of said inner container and said outer container.

2. An insulating double-layered container aocording to claim 1. wherein an antibacterial layer is formed on the inner surface of the inner container.

3. An insulating double-layered container according to one of claims 1 and 2, comprising an insulating vacuum layer formed between metallic inner and outer containers, wherein one of the inner container and outer container is made of metallic material containing antibacterial material.

4. An insulating double-layered container according to claim 3, comprising metallic material containing antibacterial material, wherein an antibacterial layer is formed on at least the inner surface of the said inner container by forming said inner container using metallic material containing antibacterial material.

5. An insulating double-layered container according to claim 3, comprising at least one of said inner container and outer container is formed by austenitic stainless steel with 1.5-5% copper content.

6. An insulating double-layered container according to claim 5, wherein the inner container is made of austenitic stainless steel with 1.5-5% copper content.

7. An insulating double-layered container according to claim 5, wherein a metal-plated layer is formed on at least one of the copper-containing faces of the insulating layer side of the inner and outer containers.

8. An insulating double-layered container according to claim 7, wherein said inner container is made of austenitic stainless steel with 1.5-5% copper content; and metal-plated layer is formed on the insulating-layer side of the inner container.

9. An insulating double-layered container aocording to claim 5, wherein at least one of the copper-containing faces of the inner surface of the inner container or the outer surface of the outer container is surface-polished by abrasives.

10. An insulating double-layered container according to claim 1, wherein the insulating layer is formed between the metallic inner and outer containers of the metallic double-layered container, and the antibacterial layer made of synthetic resin containing antibacterial material is formed on the inner surface of the inner container.

11. An insulating double-layered container according to one of claims 1 through 10, wherein the south portion of the inner container is formed with a smaller diameter than the other portions of said container.

12. A production method of an insulating double-layered container characterized in that the method comprises the steps of:
forming an inner container and an outer container, wherein at least one of the inner or outer container made of austenitic stainless steel with 1.5-5% copper content,
joining the inner and the outer containers to form an integral unit with a space therebetween,
evacuating said space to form an insulating layer,
surface-polishing by abrasives at least one of the copper-containing faces of the inner surface of the inner container or the outer surface of the outer container.

13. A production method of an insulating double-layered container according to claim 12, wherein the surface-polished surface was treated to recover its antibacterial property by soaking in an acidic solution after said surface-polishing treatment.

14. A production method of a metallic insulating double-layered container according to one of claims 12 and 13, wherein the above-mentioned surface is blast-polished.
